(19) Europäisches Patentamt
European Patent Office
Office européen des brevets

(11) EP 0 542 073 B1

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(51) Int Cl.6: **C08G 18/08**, C08G 18/65, C09J 175/04
// (C09J175/04, 161:06, 163:00)

(21) Anmeldenummer: **92118677.1**

(22) Anmeldetag: **31.10.1992**

(54) **Wässrige Polyurethandispersionen**

Aqueous polyurethane dispersions

Dispersions aqueuses de polyuréthane

(84) Benannte Vertragsstaaten:
**BE DE ES FR GB IT NL**

(30) Priorität: **15.11.1991 DE 4137660**

(43) Veröffentlichungstag der Anmeldung:
**19.05.1993 Patentblatt 1993/20**

(73) Patentinhaber: **BASF Aktiengesellschaft**
**67063 Ludwigshafen (DE)**

(72) Erfinder:
- **Wallon, Alexander, Dr.**
  **W-6733 Hassloch (DE)**
- **Maempel, Lothar, Dr.**
  **W-6835 Bruehl (DE)**
- **Auchter, Gerhard, Dr.**
  **W-6702 Bad Duerkheim (DE)**
- **Seibert, Horst**
  **W-6701 Fussgoenheim (DE)**

(56) Entgegenhaltungen:
**EP-A- 0 073 392**
**EP-A- 0 103 174**
**EP-A- 0 242 731**
**EP-A- 0 259 679**
**EP-A- 0 272 566**
**EP-A- 0 382 052**
**WO-A-90/06330**

Bemerkungen:
Die Akte enthält technische Angaben, die nach dem Eingang der Anmeldung eingereicht wurden und die nicht in dieser Patentschrift enthalten sind.

EP 0 542 073 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft wäßrige Dispersionen, enthaltend ein Polyurethan und 5 bis 60 Gew.-%, bezogen auf das Polyurethan eines die Haftung verbessernden Polymeren, wobei das Polyurethan aufgebaut ist aus

(a) organischen Diisocyanaten und

(b) Dihydroxylverbindungen mit einem Molekulargewicht über 500 bis 5000 g/mol, welche keine Ionengruppen oder in ionische Gruppen überführbare Gruppen enthalten

(c) Verbindungen mit ein oder zwei gegenüber Isocyanat reaktiven funktionellen Gruppen und mindestens einer ionischen oder in eine ionische Gruppe überführbaren Gruppe

(d) Verbindungen mit mindestens 3 Isocyanatgruppen oder mindestens 3 gegenüber Isocyanat reaktiven Gruppen

(e) gegebenenfalls von (c) verschiedenen Verbindungen mit zwei gegenüber Isocyanat reaktiven funktionellen Gruppen und einem Molgewicht von 60 bis 500 g/mol

wobei Verbindungen d) in solchen Mengen eingesetzt werden, daß die Funktionalität F aller Aufbaukomponenten, welche definiert wird durch den Quotienten

$$F = \frac{\text{Molzahl aller Isocyanatgruppen und mit Isocyanat reaktiver funktioneller Gruppen}}{\text{Molzahl aller Aufbaukomponenten}}$$

Werte von 2,01 bis 2,5 beträgt, und das Polyurethan, oder dessen Prepolymer in einem unter 100°C siedenden, mit Wasser mischbaren Lösungsmittel hergestellt und nach Zusatz des die Haftung verbessernden Polymeren in Wasser dispergiert von wird und im Falle des Prepolymeren anschließend die weitere Umsetzung zum Polyurethan erfolgt, wobei das die Haftung verbessernde Polymer ausgewählt ist aus Phenol-Formaldehyd-Kondensationsharzen, Epoxidharzen, Polyvinylacetat, Polyvinylchlorid, Polymethacrylaten, Polyamiden, Polyethern, Polyestern, Polyuretharen und Phenocrylat.

In WO-A-9 006 330 und EP-A-0 259 679 werden ähnliche wößrige PU-Dispersionen beschrieben, wobei keine Codispergierung mit dem die Haftung verbersernden Polymeren stattfuidet.

Aus der deutschen Patentanmeldung 40 24 567 und der DE-A-39 03 538 sind emulgatorfreie Dispersionen für die Verwendung als Klebstoff bekannt, welche ein Polyurethan und weitere Polymere, z.B. ein Phenol-Formaldehydharz, zur Verbesserung der Haftungseigenschaften enthalten. Nach den in der DE-A- 39 03 538 beschriebenen Verfahren wird das Polyurethan in einem niedrigsiedenden, mit Wasser mischbaren Lösungsmittel hergestellt, anschließend das die Haftung verbessernde Polymer zugesetzt und erst danach das erhaltene Gemisch in Wasser dispergiert.

Auf diese Weise werden stabile wäßrige Dispersionen erhalten, in denen sich das zugesetzte Polymer mutmaßlich im Innern der Dispersionsteilchen befindet und von einer stabilisierenden Polyurethanschicht umhüllt wird. Insbesondere weisen diese Dispersionen bei der Verwendung als Klebstoffe eine gute Anfangshaftfestigkeit auf. Unbefriedigend ist jedoch noch die Wärmestandfestigkeit der hergestellten Klebstoffbeschichtungen.

Aufgabe der vorliegenden Erfindung waren daher Dispersionen mit guten Klebeeigenschaften und einer verbesserten Wärmestandfestigkeit der hergestellten Verklebungen.

Demgemäß wurden die eingangs definierten Dispersionen, sowie ihre Verwendung als Klebstoff gefunden.

Bevorzugte Ausführungsformen der Erfindung sind den Unteransprüchen zu entnehmen.

Die erfindungsgemäßen emulgatorfreien Dispersionen enthalten ein Polyurethan und 5 bis 60 Gew.-% bevorzugt 10 bis 30 Gew.-%, bezogen auf das Polyurethan eines die Haftung verbessernden Polymeren.

Das Polyurethan ist im wesentlichen, bevorzugt ausschließlich, aufgebaut aus den Komponenten (a) bis (e). Bei den gegenüber Isocyanat reaktiven funktionellen Gruppen handelt es sich um Hydroxyl-, primäre oder sekundäre Aminogruppen.

Als Diisocyanate (a) sind aliphatische, cycloaliphatische und aromatische Diisocyanate geeignet. Vorzugsweise werden solche mit der allgemeinen Formel $X(NCO)_2$ eingesetzt, wobei X für einen aliphatischen Kohlenwasserstoffrest mit 4 bis 12 C-Atomen, einen cycloaliphatischen mit 6 bis 15 Atomen oder einen aromatischen Kohlenwasserstoffrest mit 6 bis 15 C-Atomen steht.

Geeignete aliphatische, cycloaliphatische und aromatische Diisocyanate sind z.B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocanat, 4,4'-Diisocyanatodiphenylmethan, 4,4'-Diisocyanatodicyclohexylmethan, 2,4- und 2,6-Toluylendiisocyanat.

Es können auch Gemische der Diisocyanate eingesetzt werden. Insbesondere haben sich Gemische von aliphatischen bzw. cycloaliphatischen Diisocyanaten mit aromatischen Diisocyanten im Molverhältnis von 1:4 bis 5:1 als geeignet erwiesen.

Neben den Diisocyanaten können in untergeordneten Mengen auch Monoisocyanate zur Molekulargewichtsregulierung eingesetzt werden.

Geeignete Dihydroxylverbindungen (b) mit einem Molekulargewicht über 500 bis 5000 sind die bekannten Polyester, Polyether, Polythioether, Polylactone, Polyacetale, Polycarbonate und Polyesteramide mit 2 Hydroxylgruppen. Bevorzugt sind solche Dihydroxylverbindungen, deren Molekulargewicht zwischen 750 und 3000 liegt. Selbstverständlich können auch Gemische dieser Dihydroxylverbindungen eingesetzt werden.

Als Komponente (c) geeignet sind z.B. aliphatische, cycloaliphatische oder aromatische Mono- oder Dihydroxycarbonsäuren. Bevorzugt sind Dihydroxyalkylcarbonsäuren, insbesondere mit 3 bis 10 C-Atomen, wie sie auch in der US-A-3 412 054 beschrieben sind. Insbesondere bevorzugt sind Verbindungen der allgemeinen Formel

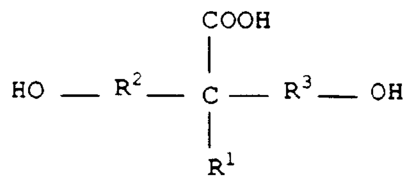

in welcher $R^1$ für ein Wasserstoffatom oder einen Alkylrest mit 1 bis 4 Kohlenstoffatomen und $R^2$ sowie $R^3$ für eine $C_1$-$C_4$-Alkylengruppe stehen. Beispielsweise genannt sei 2,2-Dimethylolpropionsäure.

Erwähnenswert sind weiterhin eine oder zwei Hydroxylgruppen bzw. Aminogruppen enthaltende tertiäre Ammoniumsalze sowie Aminocarbonsäuren oder Aminosulfonsäuren z.B. Lysin, β-Alanin, N-(2-Aminoethyl)-2-aminoethansulfonsäure und die in der DE-A-20 34 479 genannten Addukte von aliphatischen diprimären Diaminen an α-olefinische Carbonsäuren, z.B. das Addukt von Ethylendiamin an Acrylsäure.

Aufbaukomponente (c) enthält Ionengruppen bzw. in Ionengruppen überführbare Gruppen, um die Dispergierbarkeit des Polyurethans in Wasser zu gewährleisten. Ihr Anteil beträgt üblicherweise 0,03 bis 0,5 Grammäquivalent, vorzugsweise 0,05 - 0,4 Grammäquivalent, bezogen auf 1 Mol Isocyanatgruppen.

Zur Überführung von potentiellen anionischen Gruppen, z.B. Carbonsäuregruppen oder Sulfonsäuregruppen in Ionengruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung der potentiellen kationischen Gruppen, z.B. der tertiären Aminogruppen in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyljodid, Dimethylsulfat, Benzylchlorid, Chloressigethylester oder Bromacetamid geeignet. Weitere geeignete Neutralisations- und Quarternierungsmittel sind z.B. in der US-PS 3 479 310, Spalte 6, beschrieben.

Die Neutralisation bzw. Quaternisierung der ionischen oder der potentiell ionischen Gruppen kann vor, während und insbesondere nach der Isocyanat-Polyadditionsreaktion erfolgen.

Gegebenenfalls können auch nichtionische Emulgatoren, wie einwertige Polyetheralkohole des Molgewichtsbereiches 500 bis 10 000 g/mol, vorzugsweise von 1 000 bis 5 000 g/mol mitverwendet werden. Der Einsatz nichtionischer Emulgatoren ist jedoch aufgrund des Gehalts an Verbindungen c) im allgemeinen nicht notwendig.

Bei den Verbindungen d) handelt es sich um Verbindungen mit mindestens drei, insbesondere drei Isocyanatgruppen oder mit Isocyanat reaktiven Gruppen. In Betracht kommen z.B. Triole wie Trimethylolpropan oder Glycerin oder auch Ether- und Estergruppen aufweisende Trihydroxylverbindungen, Triaminverbindungen wie Diethylentriamin, 4-Aminomethyloctandiamin, Trisaminoethylamin, Hydroxyl- und Aminogruppen enthaltende Verbindungen wie Diethanolamin oder Triisocyanatverbindungen, wie Biurete oder Isocyanurate, z.B. des Isophorondiisocyanats oder 1,6-Hexandiisocyanats. Das Molekulargewicht der Verbindungen d) liegt üblicherweise zwischen 60 und 500 g/ mol. Bevorzugt handelt es sich bei d) um Verbindungen mit 3 gegenüber Isocyanat reaktiven Gruppen.

Aufbaukomponenten (e) sind im wesentlichen Verbindungen, welche zwei Hydroxylgruppen, zwei Aminogruppen oder eine Hydroxyl- und eine Aminogruppe enthalten. In Betracht kommen z.B. Dihydroxylverbindungen, wie Propandiol-(1,3), Butandiol-(1,4), Diamine wie Ethylendiamin, Hexamethylendiamin, Piperazin, 2,5-Dimethylpiperazin, 1-Amino-3-aminomethyl-3,5,5-trimethyl-cyclohexan (Isophorondiamin), 4,4'-Diaminodicyclohexylmethan, 2,4-Diamino-cyclohexan, 1,2-Diamino-propan, Hyrazin oder Aminoalkohole wie Ethanolamin, Isopropanolamin, Methylethanolamin oder Aminoethoxyethanol.

Die Anteile der Komponenten a) bis e) werden insbesondere so gewählt, daß die Summe der gegenüber Isocyanat reaktiven Hydroxyl- oder Aminogruppen 0,9 bis 1,1, bevorzugt 0,95 bis 1,05 Grammäquivalente gegenüber 1 Grammäquivalent Isocyanat beträgt.

Besonders bevorzugt entsprechen die gegenüber Isocyanat reaktiven funktionellen Gruppen in ihrer Anzahl ungefähr den Isocyanatgruppen.

Der Anteil der Komponenten e) kann nicht notwendig sein oder zumindest gering, z.B. unter 0,4 Grammäquivalent, bezogen auf 1 Mol Isocyanatgruppen gehalten werden, da die Kettenverlängerung im wesentlichen auch durch Komponente d) wirkt werden kann.

Der Anteil der Komponenten d) wird so gewählt, daß die Funktionalität F, welche definiert ist als:

$$F = \frac{\text{Molzahl aller Isocyanatgruppen und mit Isocyanat reaktiver funktioneller Gruppen}}{\text{Molzahl aller Aufbaukomponenten}}$$

Werte von 2,01 bis 2,5, vorzugsweise von 2,01 bis 2,20 und besonders bevorzugt von 2,01 bis 2,10 beträgt.

Der Nenner der Formel beinhaltet die Summe der Molzahlen der am Aufbau des Polyurethans beteiligten Komponenten, die eine oder mehrere Isocyanatgruppen bzw. mit Isocyanat reaktive funktionelle Gruppen enthalten, beispielsweise die Komponenten (a), (b), (c), (d) und/oder (e).

Wenn lediglich difunktionelle Verbindungen eingesetzt werden, ist F=2.

Zur Herstellung des Polyurethans können die Aufbaukomponenten (a) bis (e) in einem niedrig siedenden, mit Wasser mischbaren organischen Lösungsmittel in bekannter Weise umgesetzt werden, wie es z.B. auch in der DE-A-34 37 918 beschrieben ist.

Als Lösungsmittel sind z.B. Tetrahydrofuran, Methylethylketon, N-Methylpyrrolidon und insbesondere Aceton empfehlenswert.

Die Reaktionstemperatur liegt vorzugsweise bei 50 bis 100°C.

Zur Beschleunigung der Reaktion der Diisocyanate können übliche und bekannte Katalysatoren, wie Dibutylzinndilaurat, Zinn-II-octoat oder 1,4-Diazabicyclo-(2,2,2)-octan, mitverwendet werden.

Das erhaltene Polyurethan, welches im wesentlichen frei von Isocyanatgruppen ist, wird dann nach Zusatz des haftungsverbessernden Polymeren in Wasser dispergiert und das organische Lösungsmittel durch Destillation im gewünschten Ausmaß, im allgemeinen vollständig, entfernt.

Die Herstellung des Polyurethans kann auch in der Weise erfolgen, daß in dem niedrig siedenden mit Wasser mischbaren organischen Lösungsmittel zunächst ein Polyurethanprepolymer hergestellt wird. Insbesondere werden dazu zumindest die Aufbaukomponenten (a), (b) und Teile von c) miteinander umgesetzt. Nach Zusatz des haftungsverbessernden Polymeren wird das erhaltene Polyurethanprepolymer, welche noch Isocyanatgruppen enthält, in Wasser dispergiert. Danach kann die Umsetzung mit den weiteren Aufbaukomponenten erfolgen. Anschließend kann, wie bereits oben beschrieben, das organische Lösungsmittel entfernt werden.

Als haftungsverbessernde Polymere kommen eine Vielzahl von unterschiedlichen Polykondensaten, radikalisch polymerisierten Polymeren oder Polyaddukten in Betracht.

Bevorzugt handelt es sich beim haftungsverbessernden Polymer Phenol-Formaldehyd-Kondensationsharze, insbesondere solche mit Molgewichten (Gewichtsmittel $\overline{M}_w$) zwischen 500 und 2000 sowie Erweichungstemperaturen (gemessen nach DIN 53 736) im Bereich zwischen 80 und 130°C. Besonders bevorzugt handelt es sich bei den Phenol-Formaldehyd-Kondensationsharzen um Novolacke, wie sie durch sauer katalysierte Umsetzung von Phenolen, insbesondere Phenol oder durch $C_1$-$C_{10}$-Alkylgruppen substituierte Phenole mit Formaldehyd erhältlich sind. Insbesondere werden bei der Umsetzung 1,05 bis 1,3 Mol Phenole pro Mol Formaldehyd eingesetzt.

Insbesondere eignen sich auch Epoxidharze, vorzugsweise Umsetzungsprodukte von Epoxiden wie Epichlorhydrin mit Bisphenol A; bevorzugt sind solche mit Molgewichten (Gewichtsmittel $\overline{M}_n$) zwischen 500 und 5000 und Erweichungstemperaturen im Bereich zwischen 80 und 130°C.

Ferner kommen als haftungsverbessernde Polymere auch Polyvinylacetat, Polyvinylchlorid, Polymethacrylate, Polyamide, Polyether, Polyester, Polyetherdiole, Polyesterdiole, Polyurethane, insbesondere salzgruppenfreien Polyurethane, und Phenacrylat in Betracht.

Als Polyvinylacetate werden die Homopolymerisate des Vinylacetates bevorzugt. Einsetzbar sind auch seine Copolymerisate, die bis zu 10 Gew.-% Comonomere wie Vinyllaurat, Vinylstearat oder bevorzugt (Meth)acrysäure-, Fumarsäure- oder Maleinsäureester mit $C_1$- bis $C_8$-Alkanolen wie Methanol, n-Butanol oder 2-Ethylhexanol enthalten. Die Polymerisate weisen üblicherweise einen K-Wert, gemessen bei 25°C in Cyclohexanon nach DIN 53 726, von 45 bis 60 auf. Unter Polyvinylchlorid werden im allgemeinen die Homopolymerisate des Vinylchlorids und seine Copolymerisate, die bis zu 10 Gew.-% an Comonomeren wie Ethylen oder Vinylacetat enthalten, verstanden. Ihr K-Wert (25°C, Cyclohexanon, DIN 53 726) sollte zwischen 45 und 55 liegen. Als Polymethacrylat setzt der Fachmann üblicherweise Homopolymerisate des Methylacrylats oder seine Copolymerisate mit bis zu 10 Gew.-%, bezogen auf das Copolymerisat, an Vinylacetat, Acrylsäureestrn von $C_1$- bis $C_8$-Alkanolen oder Methacrylsäureestern mit $C_2$- bis $C_8$-

Alkanolen ein. Ihr Schmelzindex MFI, bestimmt nach DIN 53 735 (230°C/3,8 kg) liegt im allgemeinen zwischen 0,1 und 3,0. Die Herstellung dieser Polymerisate erfolgt im allgemeinen durch radikalische Polymerisation der ethylenisch ungesättigten Monomeren zwischen 30 und 150°C in Substanz, Lösung oder Emulsion mit anschließender Trocknung. Solche Polymerisate sind allgemein bekannt, z.B. aus Houben-Weyl, Methoden der organischen Chemie, Band E20, 1987, Seiten 1115-1125, 1041-1062 und 1141-1174.

Geeignete Polyamide haben eine K-Wert von 65 bis 80, gemessen in $H_2SO_4$ bei 25°C nach DIN 53 727. Es handelt sich üblicherweise um Polymere, die sich von Lactamen mit 7 bis 13 Ringgliedern wie ε-Caprolactam, ε-Capryllactam oder ω-Laurinlactam ableiten, beispielsweise wie Polycaprolactam (PA6), sowie um Polyamide, die durch Umsetzen von Dicarbonsäuren mit Diaminen erhalten werden. Beispiele hierfür sind Polyhexamethylenadipinamid (PA66), Polyhexamethylensebacinamid (PA610) oder Polyhexamethylendodecanamid (PA612). Geeignete Dicarbonsäuren sind beispielsweise Alkandicarbonsäuren mit 4 bis 12, insbesondere 6 bis 10 Kohlenstoffatomen sowie Phthalsäure, Terephthalsäure und Isophthalsäure sowie beliebige Mischungen dieser Säuren. Als Diamine seien beispielsweise Alkandiamine mit 4 bis 12, insbesondere 4 bis 8 Kohlenstoffatomen, ferner m-Xylylendiamin, p-Xylylendiamin, deren hydrierte Derivate, Bis-(4-aminophenyl)methan, Bis-(4-aminocyclohexyl)methan oder Bis(4-aminophenyl)propan-2,2 oder deren Mischungen genannt. Aufgrund der guten Löslichkeit werden Copolymere bevorzugt, beispielsweise ein Copolyamid aus 30 bis 40 Gew.-% Adipinsäure, 15 bis 20 Gew.-% Hexamethylendiamin, 30 bis 35 Gew.-% und 15 bis 20 Gew.-% ε-Caprolactam bzw. ε-Aminocapronsäure. Die Herstellung dieser bekannten Polymeren ist allgemeines Fachwissen, s. beispielsweise Römpp, Chemielexikon, 8. Auflage, Seiten 2861, 3058 und 3267 oder EP-A-129 195 und EP-A-129 196.

Die Polyetherdiole sind an sich bekannt, beispielsweise aus Kunststoff-Handbuch Bd. 7 (1983) Seiten 42 bis 54. Genannt seien Polyethylenoxid, Polypropylenoxid oder Polytetrahydrofuran oder deren Copolymere mit zwei endständigen Hydroxylgruppen. Sie werden in bekannter Weise hergestellt durch im allgemeinen anionische Polyaddition, s. beispielsweise N.G. Gaylord, High Polymers, Bd. 13, New York 1963, Part I. Untergeordnete Bedeutung haben Polyetherole, die zur Reaktivitätserhöhung mit Ethylenoxid gepfropft sind. Die Polyetherdiole haben im allgemeinen ein Molekulargewicht von 300 bis 3000, was einem K-Wert in DMF bei 25° nach DIN 53 726 vom 25 bis 60 entspricht. Bevorzugte Molekulargewichte liegen zwischen 800 und 2200.

Als Polyether verwendet man beispielsweise Polyethylenoxid, Polypropylenoxid oder Polytetrahydrofuran. Die Polyether weisen üblicherweise einen K-Wert in DMF bei 25°C nach DIN 53 726 von 20 bis 50 auf. Sie sind allgemein bekannt z.B. aus Encyclopedia of Polymer Science and Technology, Band 6, 1967, Seite 103 und folgende, Band 9, 1968, Seite 668 und folgende und Band 13, 1970, Seite 670 und folgende.

Als Polyester werden monomerfreie ungesättigte Polyesterharze bevorzugt. Diese sind bekannte Kondensationsprodukte aus mehrwertigen, insbesondere zweiwertigen Carbonsäuren oder deren veresterbaren Derivaten, insbesondere deren Anhydride, die mit mehrwertigen, insbesondere zweiwertigen Alkoholen verestert sind, und ggf. zusätzliche Reste einwertiger Carbonsäuren oder einwertiger Alkohole enthalten. Als Ausgangsstoff seien genannt: Maleinsäure, Fumarsäure, Phthalsäure, Isophthalsäure, Terephthalsäure, Maleinsäureanhydrid, Phthalsäureanhydrid, Isophthalsäureanhydrid, Ethylenglykol, Propylenglykol, Butandiol-1,4 oder Neopentylglykol. Untergeordnete Bedeutung im Sinne der Erfindung haben solche Harze, die durch Cokondensation von Bisphenol A, Epichlorhydrin-bisphenol A Kondensaten und Methacrylsäure hergestellt werden. Monomerfrei in diesem Zusammenhang bedeutet, daß diese sogenannten UP-Harze nicht in zur Vernetzung geeigneten Monomeren wie Styrol gelöst sind. Die Produkte haben üblicherweise eine Viskosität bei 150°C von 1000 bis 6000 mPa·s, insbesondere 2000 bis 4000 mPa·s.

Als Polyesterdiole sind Kondensationsprodukte, die zwei endständige OH-Gruppen aufweisen, aus Dicarbonsäuren wie Adipinsäure oder Isophthalsäure mit Diolen wie beispielsweise Butandiol-(1,4), Hexandiol-(1,6) oder Neopentylglykol, geeignet.

Der Molekulargewichtsbereich der einsetzbaren Polyesterdiole liegt im allgemeinen zwischen 300 und 5000. Bevorzugt wird ein Molekulargewicht zwischen 800 und 2500, entsprechend einem K-Wert in DMF bei 25°C nach DIN 53 276 von 30 bis 55. Diese Polymeren und ihre Herstellung sind allgemein bekannt aus Kunststoff-Handbuch Bd. 7 (1983) Seiten 54 bis 62 und DE 1 268 842.

Salzgruppenfreie Polyurethane sind bekannte Additionspolymere auf Basis von Polyether- oder Polyesterdiolen, Isocyanaten wie Hexamethylendiisocyanat, 2,4-Diisocyanatodiphenylmethan und eventuell bi- oder trifunktionellen Kettenverlängerern, die noch üblichen Verfahren (Kunststoff-Handbuch, Karl-Hanser-Verlag, Band 7, (1966) hergestellt werden. Bevorzugt werden niedermolekulare Kondensate (K-Wert in DMF bei 25°C nach DIN 53 726 zwischen 25 und 60) eingesetzt. Vernetzte Polyurethane haben untergeordnete Bedeutung.

Phenacrylate werden bevorzugt durch Addition von mit Acrylsäure oder Methacrylsäure veresterten Bisphenol A Glycidethern mit Terephthalsäure hergestellt. Ebenso können Phenacrylate auf Basis von epoxydierten Novolaken eingesetzt werden. Die K-Werte der Polymerisate liegen im allgemeinen zwischen 30 und 55 (in Cyclohexan bei 25°C nach DIN 53 726).

Das haftungsverbessernde Polymer wird dem Polyurethan bzw. dessen Prepolymer, welche in einem niedrig siedenden mit Wasser mischbaren Lösungsmitel vorliegen, vor der Dispergierung in Wasser zugesetzt. Prinzipiell kann

das Harz zu einem beliebigen Zeitpunkt zu der Reaktionsmischung der Ausgangskomponente des Polyurethans gegeben werden. Besonders vorteilhaft ist jedoch, das Harz erst dann zuzumischen, wenn der Prepolymeraufbau bereits fortgeschritten ist und der NCO-Gehalt des Prepolymeren einen Wert von weniger als 5 % Gew.-% erreicht hat. Insbesondere im Fall von Harzen mit gegenüber Isocyanaten besonders reaktiven Gruppen, wie z.B. Novolaken, sollten die Harze nur in einem Polyurethan mit einem NCO-Gehalt nahe 0 Gew.-% eingearbeitet werden. Das Polymer kann als solches oder auch als Lösung zugesetzt werden. Als Lösungsmittel für das Polymer sind neben Wasser (z.B. bei Phenol-Formaldehyd-Harzen) insbesondere ebenfalls niedrig siedende, mit Wasser mischbare organische Lösungsmittel geeignet.

Die schließlich nach der Dispergierung des Gemisches in Wasser, gegebenenfalls Umsetzung des Polyurethanprepolymeren zum Polyurethan und gegebenenfalls Abdestillation des organischen Lösungsmittels erhaltene, erfindungsgemäße Dispersion, weist bevorzugt einen Feststoffgehalt von 10 bis 70 Gew.-%, insbesonere 20 bis 50 Gew.-% auf.

Die erfindungsgemäßen Dispersionen können unmittelbar als Kontaktkleber zum Verkleben verschiedenster Substrate, z.B. von Holz, Kunststoff, Glas und Metall verwendet werden. Zur Erzielung spezieller Eigenschaften können den Dispersionen weitere Zusatzstoffe wie Weichmacher, Filmbildehilfsmittel, Füllstoffe etc. zugesetzt werden. Vorteilhafterweise werden Klebstoffbeschichtungen auf die Oberflächen beider zu verklebenden Substrate aufgetragen.

Die Dispersionen zeichnen sich bei guten Klebeeigenschaften, insbesondere einer guten Anfangshaftfestigkeit, durch eine hohe Wärmestandfestigkeit der hergestellten Verklebungen aus.

Die in den nachfolgenden Beispielen verwendeten Symbole haben die nachstehend wiedergegebenen Bedeutungen:

ADS = Adipinsäure
B14 = 1,4-Butandiol
TDI = Toluylendiisocyanat
HDI = Hexamethylendiisocyanat
IPDI = Isophorondiisocyanat
PUD = Na-Salz des Michael-Addukts aus Acrylsäure und Ethylendiamin
DBTL = Dibutylzinndilaurat
DMPA = Dimethylolpropionsäure
TMP = Trimethylolpropan

Vergleichsbeispiel 1

Einer Mischung aus entwässertem Polyesterdiol, hergestellt aus Adipinsäure und Butandiol, DMPA, 1,4-Dihydroxybutan, Aceton I und Katalysator wurden bei 60°C IPDI und HDI zugegeben. Nach zwei Stunden Reaktionszeit bei 70°C wurde das Aceton II zugesetzt, die Reaktionsmischung hatte dann einen NCO-Gehalt von 0,60 Gew.-%. Bei 50°C wurde mit PUD-Salz, das als 40%ige Lösung in Wasser vorlag, kettenverlängert. Nach 5 Minuten wurde die Harzlösung, hergestellt aus Aceton III und einem Phenol-Formaldehyd-Kondensat, zugesetzt und 5 Minuten bei 50°C gerührt. Anschließend wurde mit Wasser dispergiert und das Aceton abdestilliert.

Die entstandene feinteilige Dispersion hat einen Feststoffgehalt von 41 Gew.-%. Die Funktionalität aller Aufbaukomponenten ist 2.

| | Molmenge [mmol] | Gewichtsteile [g] |
|---|---|---|
| Polyesterdiol (OH-Z.=45,0) | 162 | 403 |
| DMPA | 28 | 3,8 |
| 1,4-Dihydroxybutan | 323 | 29,1 |
| IPDI | 289 | 64,3 |
| HDI | 289 | 48,6 |
| DBTL | | 0,1 |
| Aceton I | | 133 |
| | | |
| Aceton II | | 533 |
| PUD-Salz (40%ig) | 66 | 28,7 |

(fortgesetzt)

| | Molmenge [mmol] | Gewichtsteile [g] |
|---|---|---|
| Phenol-Formaldehyd-Kondensat, $M_w$=etwa 600-1200, Erweichungstemperatur 90-110°C * | | 240 |
| Aceton III | | 240 |
| entionisiertes Wasser | | 1200 |

* bestimmt nach DIN 53 736

Vergleichsbeispiel 2

Einer Mischung aus entwässertem poly-Tetrahydrofuran, DMPA, 1,4-Dihydroxybutan, Aceton I und Katalysator wurde TDI zugegeben. Nach einer Stunde Reaktionszeit bei 65°C wurde HDI zugesetzt und die Umsetzung weitere 90' fortgesetzt. Nach Zulauf von Aceton II hat die Reaktionsmischung einen NCO-Gehalt von 0,46 %. Bei 50°C wurde mit PUD-Salz, das als 40%ige Lösung in Wasser vorlag, kettenverlängert. Nach 5 Minuten wurde die Harzlösung, hergestellt aus Aceton III und einem Phenol-Formaldehyd-Kondensat, zugesetzt und 5 Minuten bei 50°C gerührt. Anschließend wurde mit Wasser dispergiert und das Aceton abdestilliert.

Die entstandene feinteilige Dispersion hat einen Feststoffgehalt von 41 %. Die Funktionalität aller Aufbaukomponenten des Copolymerisats betrug 2.

| | Molmenge [mmol] | Gewichtsteile [g] | |
|---|---|---|---|
| poly-Tetrahydrofuran (OH-Z. = 55,9) | 179 | 359 | |
| DMPA | 28 | 3,8 | |
| 1,4-Dihydroxybutan | 536 | 48,3 | |
| TDI | 399 | 69,6 | |
| HDI | 405 | 68,2 | |
| DBTL | | 0,1 | |
| Aceton I | | 133 | |
| | | | |
| Aceton II | | 533 | |
| PUD-Salz (40%ig) | 66 | 28,7 | |
| Phenol-Formaldehyd-Kondensat, $M_w$= etwa 600-1200, Erweichungstemperatur 90-110°C | | 240 | |
| Aceton III | | 240 | |
| entionisiertes Wasser | | 1200 | 133 |

Vergleichsbeispiel 3

Einer Mischung aus entwässertem Polyesterol, hergestellt aus Adipinsäure und Butandiol, DMPA, Butandiol-1,4, Aceton I und Katalysator wurde bei 60°C TDI zugegeben. Nach einer Stunde Reaktionszeit bei 65°C wurde HDI und zwei weiteren Stunden Reaktionszeit bei 70°C Aceton II zugesetzt, die Reaktionsmischung hatte dann einen NCO-Gehalt von 0,56 %.

Bei 50°C wurde mit PUD-Salz, das als 40%ige Lösung in Wasser vorlag, kettenverlängert. Nach 5 Minuten wurde die Harzlösung hergestellt aus Aceton III und einem Phenol-Formaldehyd-Kondensat, zugesetzt und 5 Minuten bei 50°C gerührt. schließend wurde mit Wasser dispergiert und das Aceton stilliert.

Die entstandene feinteilige Dispersion hat einen Feststoffgehalt von 41 %. Die Funktionalität aller Aufbaukomponenten des Copolymerisats betrug 2.

| | Molmenge [mmol] | Gewichtsteile [g] |
|---|---|---|
| Polyesterdiol (OH-Z.= 45,0) | 194 | 481 |
| DMPA | 28 | 3,8 |

(fortgesetzt)

| | Molmenge [mmol] | Gewichtsteile [g] |
|---|---|---|
| Butandiol-1,4 | 59 | 5,2 |
| TDI | 170 | 29,6 |
| HDI | 172 | 29,0 |
| DBTL | | 0,1 |
| Aceton I | | 133 |
| | | |
| Aceton II | | 533 |
| PUD-Salz (40%ig) | 66 | 28,7 |
| Phenol-Formaldehyd-Kondensat, $M_w$ = etwa 600-1200 Erweichungstemperatur 90-110°C | | 240 |
| Aceton III | | 240 |
| entionisiertes Wasser | | 1200 |

Vergleichsbeispiel 4

Einer Mischung aus entwässertem Polyesterol, hergestellt aus Adipinsäure und 1,4-Butandiol, 1,4-Butandiol, Aceton I und Katalysator wurde TDI zugegeben. Nach einer Stunde Reaktionszeit bei 65°C wurde HDI zugesetzt und weitere 90 Minuten umgesetzt. Nach Zulauf von Aceton II hatte die Reaktionsmischung einen NCO-Gehalt von 0,75 %.

Bei 50°C wurde mit PUD-Salz, das als 40%ige Lösung in Wasser vorlag, kettenverlängert. Nach 5 Minuten wurde die Harzlösung, hergestellt aus Aceton III und einem Kondensat aus Bisphenol-A und Epichlorhydrin, zugesetzt und 5 Minuten bei 50°C gerührt. Anschließend wurde mit Wasser dispergiert und das Aceton abdestilliert. Die Funktionalität aller Aufbaukomponenten des Copolymerisats betrug 2.

| | Molmenge [mmol] | Gewichtsteile [g] |
|---|---|---|
| Polyesterdiol ADS/B14 (OH-Zahl: 45,0) | 191 | 476 |
| 1,4-Butandiol | 72 | 6,5 |
| TDI | 178 | 31,0 |
| HDI | 178 | 30,0 |
| DBTL | | 0,1 |
| Aceton I | | 133 |
| | | |
| PUD-Salz (40%ig) | 94 | 16,4 |
| Aceton II | | 532 |
| Epikote 1007 (Kondensationsharz aus Bisphenol A und Epichlorhydrin, $M_w$ etwa 1550-2000) | | 240 |
| Aceton III | | 240 |
| entionisiertes Wasser | | 1200 |

Vergleichsbeispiel 5

Einer Mischung aus entwässertem Polyesterol, hergestellt aus Adipinsäure und 1,4-Butandiol, DMPA, Aceton I und Katalysator wurde TDI zugegeben. Nach einer Stunde Reaktionszeit bei 65°C wurde HDI zugesetzt und weitere 90 Minuten umgesetzt. Nach Zulauf von Aceton II hatte die Reaktionsmischung einen NCO-Gehalt von 0,65 %. Die Reaktionsmischung wurde auf 30°C abgekühlt und mit der Harzlösung, hergestellt aus Epikote 1007 und Aceton III, vermischt. Anschließend wurde mit Triethylamin neutralsiert und mit entionisiertem Wasser dispergiert. Danach wurde mit Isophorondiamin kettenverlägert und das Aceton abdestilliert.

Die Funktionalität aller Aufbaukomponenten des Copolymerisats betrug 2.

| | Molmenge [mmol] | Gewichtsteile [g] |
|---|---|---|
| Polyesterdiol ADS/B14 (OH-Zahl: 45,0) | 177 | 440 |
| 1,4-Butandiol | 53 | 4,8 |
| TDI | 234 | 40,8 |
| HDI | 234 | 39,4 |
| DBTL | | 0,1 |
| Aceton I | | 133 |
| | | |
| Aceton II | | 534 |
| Epikote 1007 (Kondensationsharz aus Bisphenol A und Epichlorhydrin, $M_w$ etwa 1550-2000) | | 240 |
| Aceton III | | 240 |
| Isophorondiamin | 85 | 14,5 |
| entionisiertes Wasser | | 1200 |

Beispiel 1

Einer Mischung aus entwässertem Polyesterol, hergestellt aus Adipinsäure und Butandiol, DMPA, 1,4-Dihydroxybutan, TMP, Aceton I und Katalysator wurden bei 60°C IPDI und HDI zugegeben. Nach zwei Stunden Reaktionszeit bei 70°C wurde das Aceton II zugesetzt, die Reaktionsmischung hatte dann einen NCO-Gehalt von 0,58 %.

Bei 50°C wurde mit PUD-Salz, das als 40%ige Lösung in Wasser vorlag, kettenverlängert. Nach 5 Minuten wurde die Harzlösung, hergestellt aus Aceton III und einem Phenol-Formaldehyd-Kondensat, zugesetzt und 5 Minuten bei 50°C gerührt. schließend wurde mit Wasser dispergiert und das Aceton stilliert.
Die Funktionalität aller Aufbaukomponenten des Copolymerisats betrug 2,03.

| | Molmenge [mmol] | Gewichtsteile [g] |
|---|---|---|
| Polyesterdiol (OH-Z. = 45,0) | 162 | 403 |
| DMPA | 28 | 3,8 |
| 1,4-Dihydroxybutan | 275 | 24,8 |
| TMP | 32 | 4,3 |
| IPDI | 289 | 64,3 |
| HDI | 289 | 48,6 |
| DBTL | | 0,1 |
| Aceton I | | 133 |
| | | |
| Aceton II | | 533 |
| PUD-Salz (40%ig) | 66 | 28,7 |
| Phenol-Formaldehyd-Kondensat, $M_w$ = etwa 600-1200, Erweichungstemperatur 90-110°C | | 240 |
| Aceton III | | 240 |
| entionsiertes Wasser | | 1200 |

Beispiel 2

Einer Mischung aus entwässertem poly-Tetrahydrofuran, DMPA, 1,4-Dihydroxybutan, TMP, Aceton I und Katalysator wurde TDI zugegeben. Nach einer Stunde Reaktionszeit bei 65°C wurde HDI zugesetzt und die Umsetzung weitere 90' fortgesetzt. Nach Zulauf von Aceton II hat die Reaktionsmischung einen NCO-Gehalt von 0,60 %.

Bei 50°C wurde mit PUD-Salz, das als 40%ige Lösung in Wasser vorlag, kettenverlängert. Nach 5 Minuten wurde die Harzlösung, hergestellt aus Aceton III und einem Phenol-Formaldehyd-Kondensat, zugesetzt und 5 Minuten bei 50°C gerührt. schließend wurde mit Wasser dispergiert und das Aceton destilliert.

Die entstandene feinteilige Dispersion hat einen Feststoffgahelt von 41 %. Die Funktionalität aller Aufbaukomponenten des Copolymerisats betrug 2,01.

| | Molmenge [mmol] | Gewichtsteile [g] |
|---|---|---|
| Polyesterdiol (OH-Z. = 55,9) | 178 | 357 |
| DMPA | 28 | 3,8 |
| 1,4-Dihydroxybutan | 516 | 46,5 |
| TMP | 18 | 2,4 |
| TDI | 402 | 70,1 |
| HDI | 408 | 68,7 |
| DBTL | | 0,1 |
| Aceton I | | 133 |
| | | |
| Aceton II | | 533 |
| PUD-Salz (40%ig) | 66 | 28,7 |
| Phenol-Formaldehyd-Kondensat, $M_w$ = etwa 600-1200, Erweichungstemperatur 90-110°C | | 240 |
| Aceton III | | 240 |
| entionisiertes Wasser | | 1200 |

Beispiel 3

Einer Mischung aus entwässertem Polyesterol, hergestellt aus Adipinsäure und Butandiol, DMPA, TMP, Aceton I und Katalysator wurde bei 60°C TDI zugegeben. Nach einer Stunde Reaktionszeit bei 65°C wurde HDI und zwei weiteren Stunden tionszeit bei 70°C wurde das Aceton II zugesetzt, die tionsmischung hatte dann einen NCO-Gehalt von 0,56 %.

Bei 50°C wurde mit PUD-Salz, das als 40%ige Lösung in Wasser vorlag, kettenverlängert. Nach 5 Minuten wurde die Harzlösung, hergestellt aus Aceton III und einem Phenol-Formaldehyd-Kondensat, zugesetzt und 5 Minuten bei 50°C gerührt. schließend wurde mit Wasser dispergiert und das Aceton destilliert.

Die entstandene feinteilige Dispersion hat einen Feststoffgehalt von 41 %. Die Funktionalität aller Aufbaukomponenten des Copolymerisats betrug 2,06.

| | Molmenge [mmol] | Gewichtsteile [g] |
|---|---|---|
| Polyesterdiol (OH-Z. = 45,2) | 194 | 481 |
| DMFA | 28 | 3,8 |
| TMP | 32 | 4,3 |
| TDI | 172 | 29,7 |
| HDI | 173 | 29,1 |
| DBTL | | 0,1 |
| Aceton I | | 133 |
| | | |
| Aceton II | | 533 |

(fortgesetzt)

| | Molmenge [mmol] | Gewichtsteile [g] |
|---|---|---|
| PUD-Salz (40%ig) | 66 | 28,7 |
| Phenol-Formaldehyd-Kondensat, $M_w$ = etwa 600-1200 Erweichungstemperatur 90-110°C | | 240 |
| Aceton III | | 240 |
| entionisiertes Wasser | | 1200 |

Beispiel 4

Einer Mischung aus entwässertem Polyesterol, hergestellt aus Adipinsäure und 1,4-Butandiol, TMP, Aceton I und Katalysator wurde TDI zugegeben. Nach einer Stunde Reaktionszeit bei 65°C wurde HDI zugesetzt und weitere 90 Minuten umgesetzt. Nach Zulauf von Aceton II hatte die Reaktionsmischung einen NCO-Gehalt von 0,74 %.

Bei 50°C wurde mit PUD-Salz, das als 40%ige Lösung in Wasser vorlag, kettenverlängert. Nach 5 Minuten wurde die Harzlösung, hergestellt aus Aceton III und einem Kondensat aus Bisphenol-A und Epichlorhydrin, zugesetzt und 5 Minuten bei 50°C gerührt. Anschließend wurde mit Wasser dispergiert und das Aceton abdestilliert.

Die Funktionalität aller Aufbaukomponenten des Copolymerisats betrug 2,07.

| | Molmenge [mmol] | Gewichtsteile [g] |
|---|---|---|
| Polyesterdiol ADS/B14 (OH-Z. = 45,0) | 191 | 476 |
| TMP | 48 | 6,4 |
| TDI | 178 | 31,0 |
| HDI | 178 | 30,0 |
| DBTL | | 0,1 |
| Aceton I | | 133 |
| | | |
| PUD-Salz (40%ig) | 94 | 40,95 |
| Aceton II | | 532 |
| Epikote 1007 (Kondensationsharz aus Bisphenol A und Epichlorhydrin, $M_w$ etwa 1550-2000) | | 240 |
| Aceton III | | 240 |
| entionisiertes Wasser | | 1200 |

Beispiel 5

Einer Mischung aus entwässertem Polyesterol, hergestellt aus Adipinsäure und 1,4-Butandiol, TMP, DMPA, Aceton I und Katalysator wurde das TDI zugegeben. Nach einer Stunde Reaktionszeit bei 65°C wurde das HDI zugesetzt und weitere 90 Minuten umgesetzt. Nach Zulauf von Aceton II hat die Reaktionsmischung einen NCO-Gehalt von 0,60 %. Die Reaktionsmischung wurde auf 30°C abgekühlt und mit der Harzlösung, hergestellt aus Epikote 1007 und Aceton III, vermischt. Anschließend wurde mit Triethylamin neutralisiert und mit entiontem Wasser dispergiert. Danach wurde mit Isophorondiamin kettenverlängert und das Aceton abdestilliert. Die Funktionalität aller Aufbaukomponenten des Copolmyerisats betrug 2,04.

| | Molmenge [mmol] | Gewichtsteile [g] |
|---|---|---|
| Polyesterdiol ADS/B14 (OH-Z. = 44,4) | 175 | 441 |
| TMP | 35 | 4,7 |
| DMPA | 157 | 21,1 |
| TDI | 232 | 40,4 |

(fortgesetzt)

| | Molmenge [mmol] | Gewichtsteile [g] |
|---|---|---|
| HDI | 232 | 39,0 |
| DBTL | | 0,1 |
| Aceton I | | 133 |
| Aceton II | | 534 |
| Triethylamin | 157 | 15,9 |
| Epikote 1007 (Kondensationsharz aus Bisphenol A und Epichlorhydrin, $M_w$ etwa 1550-2000) | | 240 |
| Aceton III | | 240 |
| entionisiertes Wasser | | 1200 |
| Isophorondiamin | 85 | 14,5 |

Klebetechnische Eigenschaften der hergestellten Dispersionen

Prüfung der Kontaktverklebung bei Raumtemperatur

Scherfestigkeit:

Die Dispersionen wurden mit 5 Gew.-%, bezogen auf ihren Feststoffgehalt, mit pyrogener Kieselsäure angedickt, wurden mit einem Rakel mit 1 mm-Zahnung auf Buchenholzscheiben auf einer Fläche von 150 x 50 $mm^2$ aufgetragen und 60 Minuten bei Raumtemperatur getrocknet. Die Buchenholzscheiben wurden anschließend miteinander verklebt, indem sie 30 Sekunden bei Raumtemperatur mit einem Druck von 0,5 $N/mm^2$ verpreßt werden. Die Scherfestigkeit wurde sofort und nach 7 Tagen Lagerung bei Raumtemperatur, durch die Kraft in $N/mm^2$, welche zum Abziehen der Buchenholzscheiben in Längsrichtung notwendig war, bestimmt.

Wärmestandfestigkeit:

Eine Hartfaserplatte wurde auf einer Fläche von 200 x 200 $mm^2$ mit einer PVC-Folie verklebt (Kontaktverklebung bei Raumtemperatur). In einem Abschälwinkel von 180° wurde die PVC-Folie mit 300 g belastet. Die Temperatur wurde alle 30 Minuten um 10°C erhöht. Die Strecke, die innerhalb dieser 30 Minuten abläuft, wird in mm angegeben.

Tabelle

| | Scherfestigkeit sofort/7 Tage [$N/mm^2$] | Wärmestandfestigkeit [°C/mm] |
|---|---|---|
| Vergleichsbeispiel 1 | 1,4/5,6 | 70/4, 80/- * |
| Vergleichsbeispiel 2 | 0,8/2,3 | 70/3, 80/- |
| Vergleichsbeispiel 3 | 1,3/2,4 | 40/0 50/- |
| Beispiel 1 | 1,5/4,9 | 70/1, 80/1, 90/1, 100/5, 110/- |
| Beispiel 2 | 1,1/2,1 | 70/1, 80/1, 90/5 100/- |
| Beispiel 3 | 1,6/4,9 | 40/0, 50/0, 60/1, 70/1 80/2, 90/2, 100/8 110/- |
| Beispiel 4 | 1,1/3,5 | 40/0, 50/0, 60/1, 70/1, 80/1, 90/1, 100/- |

* Strecke ist abgelaufen, d.h. PVC-Folie ist abgelöst

Prüfung der Kontaktverklebung nach Blitzaktivierung

Schälfestigkeit:

Die Dispersionen wurden mit einem Pinsel (1 Zoll, feine Borsten) gleichmäßig auf Styrol-Butadiengummi (SBR1-Gummi mit einer shore-A-Härte von 90 (s. DIN 16 909)) auf einer Fläche von 30 x 130 $mm^2$ aufgestrichen und 45 Minuten bei Raumtemperatur getrocknet. Nach einmaliger Aufheizung der Klebstoffilme durch IR-Strahlung auf

80°C im Verlauf von ca. 5 Sekunden (Blitzaktivierung) wurden jeweils 2 Proben 10 Sekunden mit 0,5 $N/mm^2$ miteinander verpreßt. Die Schälfestigkeit wurde sofort und nach 5 Tagen Lagerung im Klimaraum (23°C/50 % rel. Luftfeuchtigkeit) nach DIN 52 273 gemessen.

Wärmestandfestigkeit:

Die Prüfkörper wurden wie zur Schälfestigkeitsprüfung präpariert. Nach Temperung von 1 Stunde bei 50°C wurden sie bei 50°C jeweils 10 Minuten mit 5, 10, 15, 20, 25 und 30 N in aufsteigender Reihenfolge belastet. Hielt die Verklebung, so wurde die Probe entlastet, 30 Minuten auf 60°C aufgeheizt und in gleicher Weise bis max. 30 N in 10 Minutenschritten geprüft. Die Temperatur wurde nach jedem Durchlauf um 10°C erhöht und die Prüfung in gleicher Weise wiederholt. Angegeben sind jeweils die Temperatur (°C) und die Belastung (N) bei der eine Öffnung der Verklebung von mehr als 50 mm erkennbar war.

| | Schälfestigkeit [N/mm] | Wärmestandfestigkeit °C/N |
|---|---|---|
| Vergleichsbeispiel 1 | 1,5/2,2 | 50/05 |
| Vergleichsbeispiel 4 | 1,9/2,1 | 50/05 |
| Vergleichsbeispiel 5 | 3,6/1,3 | 50/20 |
| Beispiel 1 | 2,2/3,1 | 70/10 |
| Beispiel 4 | 2,3/2,5 | 70/30 |
| Beispiel 5 | 2,7/4,2 | 70/20 |

**Patentansprüche**

**1.** Wäßrige Dispersionen, enthaltend ein Polyurethan und 5 bis 60 Gew.-%, bezogen auf das Polyurethan, eines die Haftung verbessernden Polymeren, wobei das Polyurethan im wesentlichen aufgebaut ist aus

(a) organischen Diisocyanaten

(b) Dihydroxylverbindungen mit einem Molekulargewicht über 500 bis 5000 g/mol, welche keine Ionengruppen oder in ionische Gruppen überführbaren Gruppen enthalten

(c) Verbindungen mit ein oder zwei gegenüber Isocyanat reaktiven funktionellen Gruppen und mindestens einer ionischen oder in eine ionische Gruppe überführbaren Gruppe,

(d) Verbindungen mit mindestens 3 Isocyanatgruppen oder mindestens 3 gegenüber Isocyanat reaktiven funktionellen Gruppen,

(e) gegebenenfalls von (c) verschiedenen Verbindungen mit zwei gegenüber Isocyanat reaktiven funktionellen Gruppen und einem Molgewicht von 60 bis 500 g/mol

wobei Verbindungen d) in solchen Mengen eingesetzt werden, daß die Funktionalität F aller Aufbaukomponenten, welche definiert wird durch den Quotienten

$$F = \frac{\text{Molzahl aller Isocyanatgruppen und mit Isocyanat reaktiver Gruppen}}{\text{Molzahl aller Aufbaukomponenten}}$$

Werte von 2,01 bis 2,5 beträgt, und das Polyurethan, oder dessen Prepolymer in einem unter 100°C siedenden, mit Wasser mischbaren Lösungsmittel hergestellt und nach Zusatz des die Haftung verbessernden Polymeren in Wasser dispergiert wird und im Falle des Prepolymeren anschließend die weitere Umsetzung zum Polyurethan erfolgt, wobei das die Haftung verbessernde Polymer ausgewählt ist aus der Gruppe Phenol-Formaldehyd-Kondensationsharze, Epoxidharze, Polyvinylacetat, Polyvinylchlorid, Polymethacrylate, Polyamide, Polyether, Polyester, Polyurethane und Phenacrylat.

**2.** Verfahren zur Herstellung einer wäßrigen Dispersion gemäß Anspruch 1, dadurch gekennzeichnet, daß das Polyurethan oder dessen Prepolymer in einem unter 100°C siedenden, mit Wasser mischbaren Lösungsmittel hergestellt und nach Zusatz des die Haftung verbessernden Polymeren in Wasser dispergiert wird und im Falle des Prepolymeren anschließend die weitere Umsetzung zum Polyurethan erfolgt.

**3.** Verwendung der Dispersionen nach Anspruch 1 als Klebstoffe.

**4.** Klebstoffbeschichtungen, erhältlich unter Verwendung einer Dispersion nach Anspruch 1.

## Claims

**1.** An aqueous dispersion containing a polyurethane and from 5 to 60% by weight, based on the polyurethane, of an adhesion-improving polymer, wherein the polyurethane consists of

(a) organic diisocyanates,
(b) dihydroxy compounds which have a molecular weight of from more than 500 to 5,000 g/mol and contain no ionic groups or groups convertible into ionic groups,
(c) compounds having one or two functional groups reactive toward isocyanate and at least one ionic group or group convertible into an ionic group and
(d) compounds having at least 3 isocyanate groups or at least 3 functional groups reactive toward isocyanate,
(e) with or without compounds which differ from (c) and have two functional groups reactive toward isocyanate and a molecular weight of from 60 to 500 g/mol,

and compounds (d) are used in amounts such that the functionality F of all components, which is defined by the quotient

$$F = \frac{\text{Number of moles of all isocyanate groups and groups reactive with isocyanate}}{\text{Number of moles of all components}}$$

is from 2.01 to 2.5, and the polyurethane or a prepolymer thereot is prepared in a water-miscible solvent boiling below 100°C and, after addition of the adhesion-improving polymer, is dispersed in water and, in the case of the prepolymer, the further reaction to give the polyurethane is then carried out, the adhesion improving polymer being selected from the group consisting of phenol/formaldehyde condensation resins, epoxy resins, polyvinyl acetate, polyvinyl chloride, polymethacrylates, polyamides, polyethers, polyesters, polyurethanes and phenacrylate.

**2.** A process for the preparation of an aqueous dispersion as claimed in claim 1, wherein the polyurethane or the prepolymer thereof is prepared in a water-miscible solvent boiling below 100°C and, after the addition of the adhesion-improving polymer, is dispersed in water and, in the case of the prepolymer, the further reaction to give the polyurethane is then carried out.

**3.** Use of a dispersion as claimed in claim 1 as an adhesive.

**4.** An adhesive coating obtainable using a dispersion as claimed in claim 1.

## Revendications

**1.** Dispersions aqueuses, contenant un polyuréthanne et 5 à 60°% en poids, par rapport au polyuréthanne, d'un polymère améliorant l'adhérence, le polyuréthanne étant formé

a) de diisocyanates organiques,
b) de composés dihydroxylés ayant un poids moléculaire de plus de 500 à 5000 g/mole, qui ne contiennent pas de groupements ioniques ou de groupements transformables en groupements ioniques,
c) de composés comportant un ou deux groupements fonctionnels réactifs à l'égard des isocyanates et au moins un groupement ionique ou un groupement transformable en groupement ionique,
d) de composés comportant au moins 3 groupements isocyanate ou au moins 3 groupements fonctionnels réactifs à l'égard des isocyanates,
e) éventuellement, de composés différents de (c), comportant deux groupements fonctionnels réactifs à l'égard

des isocyanates et ayant un poids moléculaire de 60 à 500 g/mole,

les composés d) étant utilisés dans des proportions telles que la fonctionnalité F de tous les composants structuraux, qui est définie par le quotient

$$F = \frac{\text{Nombre de moles de tous les groupements isocyanate et groupements réactifs avec les isocyanates}}{\text{Nombre de moles de tous les composants structuraux}},$$

a des valeurs de 2,01 à 2,5, et le polyuréthanne ou le prépolymère de celui-ci étant préparé dans un solvant miscible à l'eau dont le point d'ébullition est inférieur à 100°C, puis étant dispersé dans de l'eau après l'addition du polymère améliorant l'adhérence et, dans le cas du prépolymére, étant ensuite soumis de nouveau à la réaction qui conduit au polyuréthanne, le polymère qui améliore l'adhérence étant choisi dans le groupe constitué par les résines de condensation phénolformaldéhyde, les résines époxy, le poly(acétate de vinyle), le poly(chlorure de vinyle), les polyméthacrylates, les polyamides, les polyéthers, les polyesters, les polyuréthannes et le phénacrylate.

**2.** Procédé de préparation d'une dispersion aqueuse selon la revendication 1, caractérisé en ce que le polyuréthanne ou le prépolymère de celui-ci est préparé dans un solvant miscible à l'eau dont le point d'ébullition est inférieur à 100°C, puis est dispersé dans de l'eau après l'addition du polymère améliorant l'adhérence et, dans le cas du prépolymère, celui-ci est ensuite soumis de nouveau à la réaction qui conduit au polyuréthanne.

**3.** Utilisation des dispersions selon la revendication 1 comme colles.

**4.** Enduits de colle, obtenus en utilisant une dispersion selon la revendication 1.